# EUROPÄISCHE PATENTSCHRIFT

(11) **EP 0 993 753 B1**
(45) Veröffentlichungstag und Bekanntmachung des Hinweises auf die Patenterteilung: **19.12.2001**
(21) Anmeldenummer: 98936255.3
(22) Anmeldetag: 26.06.1998
(51) Int. Cl.: H04Q 7/38, H04Q 7/20

(54) **VERFAHREN ZUM BILDEN VON FUNKTIONSEINHEITEN ZWISCHEN ERSTEN TELEKOMMUNIKATIONSGERÄTEN UND ZWEITEN TELEKOMMUNIKATIONSGERÄTEN DRAHTLOSER TELEKOMMUNIKATIONSSYSTEME**
METHOD FOR CREATING FUNCTIONAL UNITS BETWEEN FIRST TELECOMMUNICATIONS DEVICES AND SECOND TELECOMMUNICATIONS DEVICES OF WIRELESS TELECOMMUNICATIONS SYSTEMS
PROCEDE PERMETTANT DE FORMER DES UNITES FONCTIONNELLES ENTRE DES PREMIERS APPAREILS DE TELECOMMUNICATION ET DES DEUXIEMES APPAREILS DE TELECOMMUNICATION DANS DES SYSTEMES DE TELECOMMUNICATION SANS FIL

(30) Priorität: 30.06.1997 DE 19727716
(43) Veröffentlichungstag der Anmeldung: 19.04.2000
(73) Patentinhaber: SIEMENS AKTIENGESELLSCHAFT, 80333 München (DE)
(72) Erfinder: KAMPERSCHROER, Erich, D-46499 Hamminkeln (DE); KORDSMEYER, Martin, D-48477 Hörstel (DE); SCHMITZ, Georg, D-46395 Bocholt (DE); NIEDER, Stefan, D-46397 Bocholt (DE); BECKMÖLLER, Carola, D-47495 Rheinberg (DE)
(86) Internationale Anmeldenummer: DE9801755
(87) Internationale Veröffentlichungsnummer: WO9902006

(56) Entgegenhaltungen:
- US-A- 5 640 680
- KATRUFF M: "ISDN.... ON RADIO IN THE LOCAL LOOP NEAR YOU" TELCOM REPORT INTERNATIONAL, Bd. 19, Nr. 5, 1996, Seiten 34-37, XP000198331

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al:"Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zum Bilden von Funktionseinheiten zwischen ersten Telekommunikationsgeräten und zweiten Telekommunikationsgeräten drahtloser Telekommunikationssysteme gemäß dem Oberbegriff des Patentanspruches 1.

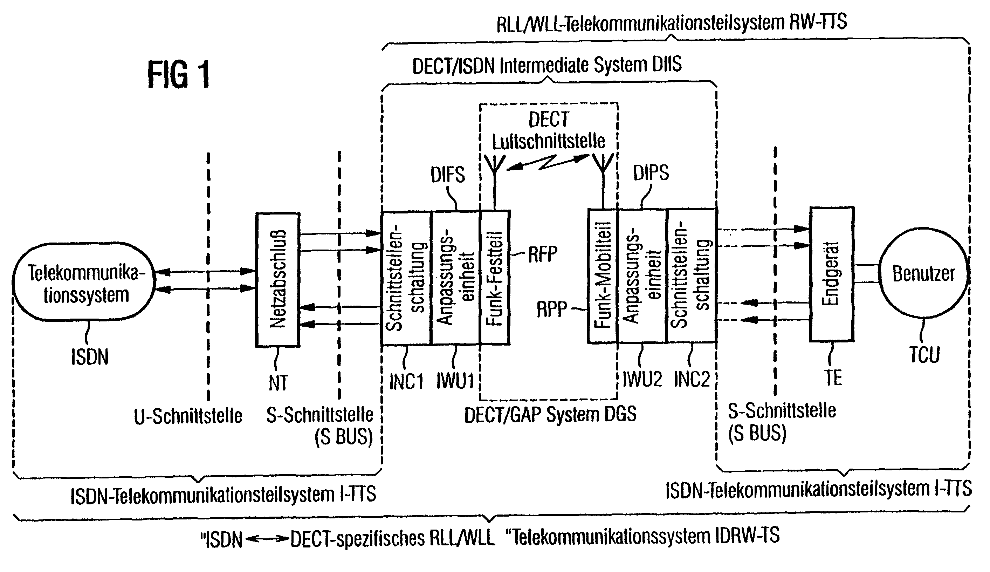

FIGUR 1 zeigt ausgehend von den Druckschriften *"Nachrichtentechnik Elektronik, Berlin 45 (1995) Heft 1*, *Seiten 21 bis 23 und Heft 3 Seiten 29 und 30" sowie IEE Colloquium 1993, 173; (1993)*, *Seiten 29/1 - 29/7; W.Hing, F.Halsall:"Cordless access to the ISDN basic rate service"* auf der Basis eines **D**ECT/**I**SDN **I**ntermediate **S**ystems DIIS gemäß der *ETSI-Publikation prETS 300822*, *Februar 1997* ein **"I**SDN ↔ **D**ECT-spezifisches **R**LL/**W**LL"-**T**elekommunikations**s**ystem IDRW-TS (**I**ntegrated **S**ervices **D**igital **N**etwork ↔ **R**adio in the **L**ocal **L**oop/**W**ireless in the **L**ocal **L**oop) mit einem ISDN-Telekommunikationsteil**s**ystem I-TTS *[vgl. Druckschrift "Nachrichtentechnik Elektronik, Berlin 41-43*, ***T****eil: 1 bis 10*, ***T****1: (1991) Heft 3, Seiten 99 bis 102;* ***T****2: (1991) Heft 4, Seiten 138 bis 143;* ***T****3: (1991) Heft 5, Seiten 179 bis 182 und Heft 6, Seiten 219 bis 220;* ***T****4: (1991) Heft 6, Seiten 220 bis 222 und (1992) Heft 1, Seiten 19 bis 20;* ***T****5: (1992) Heft 2, Seiten 59 bis 62 und (1992) Heft 3, Seiten 99 bis 102;* ***T****6: (1992) Heft 4, Seiten 150 bis 153;* ***T****7: (1992) Heft 6, Seiten 238 bis 241;* ***T****8: (1993) Heft 1, Seiten 29 bis 33;* ***T****9: (1993) Heft 2, Seiten 95 bis 97 und (1993) Heft* 3, *Seiten 129 bis 135;* ***T****10: (1993) Heft 4, Seiten 187 bis 190;"]* und einem DECT-spezifischen **R**LL/**W**LL-Telekommunikationsteilsystem RW-TTS.

Das DECT/ISDN Intermediate System DIIS bzw. das RLL/WLL-Telekommunikationsteilsystem RW-TTS basiert dabei vorzugsweise auf ein **D**ECT/**G**AP-**S**ystem DGS **[D**igital **E**nhanced (früher: **E**uropean) **C**ordless **T**elecommunication; vgl. **(1)**: Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Oktober 1992; **(2)**: Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4)**: Philips Telecommunication Review Vol. 49, No. 3, Sept. 1991, R.J. Mulder:" DECT, a universal cordless access system"; **(5)**: WO 93/21719 (FIG 1 bis 3 mit dazugehöriger Beschreibung)**]**. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen *(vgl. ETSI-Publikation prETS 300444*, *April 1995)*.

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann:"Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 1).

In dem "ISDN ↔ DECT-spezifischen RLL/WLL"-Telekommunikationssystem IDRW-TS nach FIGUR 1 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z. B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene - DECT/ISDN Intermediate System DIIS (erstes Telekommunikationsteilsystem), eine weitere standardisierte S-Schnittstelle (S-BUS), einen Netzabschluß NT (**N**etwork **T**ermination) und eine standardisierte U-Schnittstelle des ISDN-Telekommunikationsteilystems) I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface Circuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

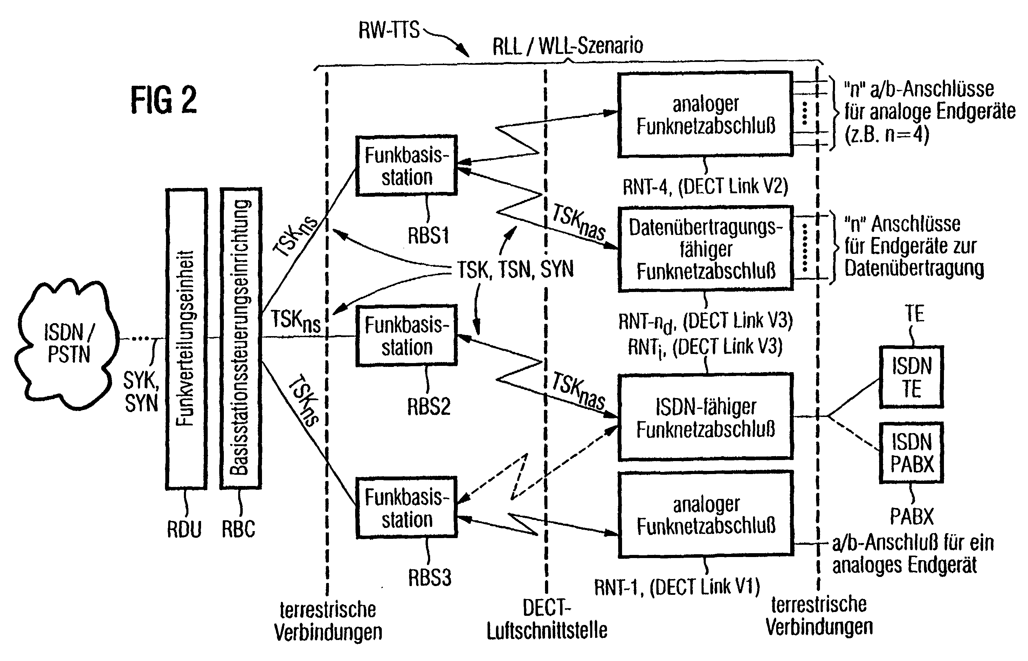

FIGUR 2 zeigt ausgehend von dem "ISDN ↔ DECT-spezifischen RLL/WLL"-Telekommunikationssystem IDRW-TS mit dem RLL/WLL-Telekommunikationsteilsystem RW-TTS gemäß FIGUR 1 ein typisches RLL/WLL-Szenario. Die drahtlose Anschlußtechnik RLL/WLL (**R**adio in the **L**ocal **L**oop/**W**ireless in the **L**ocal **L**oop) z.B. unter der Einbindung von einem DECT-System soll im vorliegenden Fall einem ISDN/PSTN-Teilnehmer ISDN/PSTN-Dienste an Standard-ISDN/PSTN-Schnittstellen verfügbar machen. Die Verwendung von Funkkanälen (z.B. DECT-Kanälen) in klassischen leitungsgebundenen Telekommunikationssystemen, wie dem ISDN/PSTN, gewinnt zunehmend an Bedeutung, insbesondere vor dem Hintergrund zukünftiger alternativer Netzbetreiber ohne eigenes komplettes Drahtnetz.

Das dargestellte RLL/WLL-Szenario besteht z.B. aus dem derzeit auf dem Markt erhältlichen Siemens DECTlink-System der Version 1 (DECTlink V1) und den daraus durch Weiterentwicklung ableitbaren DECTlink-Systemen der Versionen 2 und 3 (DECTlink V2, DECTlink V3).

In dem vorstehend erwähnten, bekannten DECTlink V1-System wurde ein Funknetzabschluß (Radio Network Termination) mit einem analogen a/b-Anschluß eingesetzt. Man spricht in diesem Fall von einem Funknetzabschluß RNT-1. Der Funknetzabschluß RNT-1 weist eine Funkverbindung zu einer Funkbasisstation RBS1...RBS3 (Radio Base-Station) z.B. der Funkbasisstation RBS3 auf. Der Funknetzabschluß RNT-1 benötigt maximal einen Nutzkanal (Traffic Channel). Die Daten auf diesem Verkehrskanal sind generell mit 32 kbit/s ADPCM sprachcodiert. Die Verwendung eines Sprachcoders hat zur Folge, daß maximale Datenraten (z. B. von Modem- oder Faxgeräten) von 9,6 kbit/s über einen 32 kbit/s DECT-Kanal nur unzureichend übertragen werden können. Die 9,6 kbit/s können zudem nur unter optimalen Bedingungen erreicht werden.

Darüber hinaus ist es möglich, einen Funknetzabschiuß mit "n" analogen a/b-Anschlüssen einzusetzen. In dem DECTlink-System der Version 2 (DECTlink V2) wurde ein Funknetzabschluß RNT-4 mit vier a/b-Anschlüssen eingeführt. Die RNT-4 benötigt maximal bis zu vier Nutzkanäle (Traffic Channels) gleichzeitig. Beim Funknetzabschluß RNT-4 wurden diese Nutzkanäle wie beim Funknetzabschluß KNT-1 generell ADPCM-codiert. Um aber die DECT-Luftschnittstelle zu entlasten, können bei der DECTlink V2 die einzelnen Verbindungen für das RNT-4 über verschiedene Funkbasisstationen RBS (z.B. die drei Funkbasisstationen RBS1...RBS3) betrieben werden. Im dargestellten Fall ist der Funknetzabschluß RNT-4 z.B. mit der Funkbasisstation RBS 1 verbunden. Der Verbindungsaufbau wird dabei von einer Funkverteilungseinheit RDU (Radio Distribution Unit) durchgeführt. Zwischen der Funkverteilungseinheit RDU und den einzelnen Funkbasisstationen ist eine Basisstationssteuerungseinrichtung RBC (Radio Basestation Controller) vorgesehen. Die Basisstationssteuerungseinrichtung RBC ist ein reiner "Schicht 1"-Baustein. Er demultiplext die Daten der Funkverteilungseinheit und paßt sie an die Schnittstelle zu der jeweilgen Funkbasisstation an. Die Funkbasisstation überträgt die Daten über die DECT-Funkschnittstelle zum Funknetzabschluß RNT-4.

Für einen ISDN-Teilnehmeranschluß ist die in den vorstehend genannten DECTlink-Systemen zur Verfügung stehende Übertragungsrate nicht ausreichend. Für ISDN werden nämlich pro B-Kanal 64 kbit/s mit definierten Bitfehlerraten gefordert.

Um die DECT-Kanalkapazität optimal ausnutzen zu können, muß zwischen der Übertragung von Sprache und der Übertragung von Daten unterschieden werden. Für die Übertragung von Daten müssen mehr DECT-Kanäle zur Verfügung gestellt werden als für die Übertragung von Sprache.

In der *ETSI-Publikation prETS 300434-1; Januar 1996* (DECT and ISDN Inter Working For End System Configuration) der 64 kbit/s LU7-Service für die Datenübertragung über DECT definiert. Bei der Datenrate orientiert man sich an den ISDN-B-Kanal.

Die *ETSI-Publikation prETS 300822*, *Februar 1997* (DECT/ISDN Inter Working for Intermediate System Configuration) beschreibt die Übertragung einer ISDN-Schnittstelle über den DECT-Funkkanal. Dabei findet in dem DECT-spezifischen RLL/WLL-System in einem Funkfestteil (Radio Fixed Part) und einem Funkmobilteil (Radio Portable Part) eine Umsetzung des ISDN-D-Kanal Protokolls über die IWU-Protokollschicht (Inter Working Unit) auf das DECT-Protokoll statt (vgl. DE-Patentanmeldungen 19625142.7 und 19625141.9). Die Protokolldaten werden in der C-Ebene z.B. im C_{f}-Signalisierungskanal über den DECT-Funkkanal übertragen. An einem ISDN-spezifischen Funknetzabschluß, als Funknetzabschluß RNTᵢ bezeichnet, wird anschließend der ISDN-Anschluß wieder zur Verfügung gestellt.

Diese Überlegungen haben zum DECTlink-System der Version 3 (DECTlink V3) geführt. Das DECTlink V3-System weist z.B. einen ISDN-fähigen, DECT-spezifischen Funknetzabschluß RNTᵢ für eine terrestrisch anschließbare ISDN-Endeinrichtung TE (**T**erminal **E**ndpoint) und/oder eine terrestrisch anschließbare ISDN-Nebenstellenanlage PABX (**P**rivate **A**utomatic **B**ranch **E**xchange) sowie einen Datenservice unterstützenden, DECT-spezifischen Funknetzabschluß RNT-n_{d} mit z.B. "n=4" a/b-Anschlüssen zur Datenübertragung für terrestrisch anschließbare Datenendgeräte auf. Die Funknetzabschlüsse RNTᵢ, RNT-n_{d} sind über eine mehrere Funkkanäle aufweisende DECT-Luftschnittstelle z.B. mit den drei Funkbasisstationen RBS1...RBS3 verbunden.

Bei dem Funknetzabschluß RNT-n_{d} wären somit wieder maximal vier Nutzkanäle (Traffic Channels) gleichzeitig möglich. Bei dem Funknetzabschluß RNTᵢ wären es zwei Nutzkanäle (2 B-Kanäle) und ein Signalisierungskanal (D-Kanal).

Wie bei dem DECTlink V2-System ist es in DECTlink V3-System wieder möglich, die verschiedenen Nutz- und Signalisierungskanäle zur gleichmäßigen Auslastung des DECT-Funkkanals über verschiedene Funkbasisstationen RBS1...RBS3 zu betreiben.

Im Unterschied zum DECTlink V2-System werden bei dem DECTlink V3-System zwei verschiedene DECT-Übertragungswege (Bearer) unterstützt, der 32 kbit/s ADPCM codierte Sprachservice sowie der 64 kbit/s LU7-Datenservice. Der Datenservice benötigt im Gegensatz zum Sprachservice zwei DECT-Zeitschlitze.

Es wird bei den Funknetzabschlüssen RNTᵢ, RNT-n_{d} zwischen der Übertragung von Sprachdaten und z.B. Modemdaten unterschieden, um die DECT-Kanalkapazität besser ausnutzen zu können. Für Sprachverbindungen werden generell nur Verbindungen mit 32 kbit/s ADPCM codierten Kanälen aufgebaut. Für Datenübertragungen werden Kanäle mit dem 64 kbit/s LU7-Datenservice aufgebaut.

Die Anzahl der jeweiligen Funknetzabschlüsse RNTᵢ, RNT-n_{d} und die Anzahl der Funkbasisstationen RBS1...RBS3 ist prinzipiell frei wählbar; sie wird sich aber vorzugsweise an den Einsatzort des "ISDN/PSTN ↔ DECT-spezifischen RLL/WLL"-Telekommunikationssystems richten (Stichwort: Netzplanung).

Die Funknetzabschlüsse RNT-1, RNT-4, RNTᵢ, RNT-n_{d} und die Funkbasisstationen KBS1...RBS3 bilden das DECT-spezifische RLL/WLL-Telekommunikationsteilsystem RW-TTS bzw. das RLL/WLL-Szenario. Das RLL/WLL-Telekommunikationsteilsystem RW-TTS ist netzabschlußseitig mit den genannten leitungsgebundenen Endgeräte und netzseitig - wie bereits erwähnt -über eine Basisstationssteuerungseinrichtung RCB und eine Funkverteilungseinheit RDU mit dem ISDN/PSTN-Telekommunikationssystem ISDN, PSTN (ISDN/PSTN-Netz) verbunden. Zwischen dem ISDN/PSTN- Telekommunikationssystem ISDN, PSTN und der Funkverteilungseinheit RDU gibt es einen Systemkanal SYK auf dem Systemnachrichten SYN übertragen werden. Die Systemnachrichten SYN enthalten dabei z.B. ISDN-Signalisierungsnachrichten und/oder ISDN/PSTN-Nutznachrichten. Zwischen den Funkbasisstationen RBS1...RBS3 und der Basisstationssteuerungseinrichtung RBC einerseits und zwischen den Funkbasisstationen RBS1...RBS3 und den Funknetzabschlüsse RNT-1, RNT-4, RNTᵢ, RNT-n_{d} andererseits gibt es Teilsystemkanäle TSK, auf den die Systemnachrichten SYN und Teilsystemnachrichten TSN übertragen werden. Die Teilsystemkanäle TSK enthalten einerseits netzabschlußseitige Teilsystemkanäle TSKₙₐₛ, die den Funkkanälen entsprechen und netzseitige Teilsystemkanäle TSKₙₛ.

Zum Bilden von Funktionseinheiten zwischen ersten Telekommunikationsgeräten und zweiten Telekommunikationsgeräten drahtloser Telekommunikationssysteme - Subskripieren (Anmelden und Registrieren) der ersten Telekommunikationsgeräte bei den zweiten Telekommunikationsgeräten -, insbesondere - stellvertretend für die Vielzahl bekannter drahtloser Residential- und Public-Telekommunikationssysteme - zwischen den Funk-Mobilstationen DIPS, RPP, RNT-1, RNT-4, RNTᵢ, RNT-n_{d} einerseits und den Funk-Basisstationen DIFS, RFP, RBS1...RBS2 andererseits der DECT-spezifischen RLL/WLL-Telekommunikationssysteme gemäß der FIGUREN 1 und 2, werden in Anlehnung an die WO 94/10785 bzw. EP-0667078 B1 während Anmelde- und Registrierungsprozeduren vorgegebene oder einzugegebende Kennwörter übertragen und gespeichert.

Für die in den FIGUREN 1 und 2 dargestellten RLL/WLL-Telekommunikationssysteme, bei dem die Funk-Basisstation DIFS, RFP, RBS1...RBS2 eine Telekommunikationsverbindung zum öffentlichen Telekommunikationsnetz ISDN, PSTN und die Funk-Mobilstation DIPS, RPP, RNT-1, RNT-4, RNTᵢ, RNT-n_{d} eine Anzahl "n" von Telekommunikationsverbindungen zu Telekommunikationsendeinrichtungen (z.B. analoge Endgeräte, ISDN-Endgeräte, PABX, Endgeräte zur Datenübertragung etc.) aufweist, hat jede Funk-Mobilstation DIPS, RPP, RNT-1, RNT-4, RNT₁, RNT-n_{d} verwaltungstechnisch bedingt nur eine einzige eineindeutige IPUI-Kennung (International Portable User Identity). Sind der jeweiligen Funk-Mobilstation DIPS, RPP, RNT-1, RNT-4, RNTᵢ, RNT-n_{d} mehrere Endeinrichtungen zugeordnet und möchte beispielsweise nur einer der Endeinrichtungsteilnehmer zum Installationszeitpunkt der Funk-Mobilstation DIPS, RPP, RNT-1, RNT-4, RNTᵢ, RNT-n_{d} einen Anschluß zum Telekommunikationsnetz haben, so wird die Funk-Mobilstation DIPS, RPP, RNT-1, RNT-4, RNTᵢ, RNT-n_{d} für diesen Teilnehmer von dem Servicetechniker vor Ort bei Inbetriebnahme als Einheit an der Funk-Basisstation DIFS, RFP, RBS1...RBS2 registriert. In Folge dieser Registrierung ist nur der Anschluß des entsprechenden Teilnehmers auf die Funk-Basisstation DIFS, RFP, RBS1...RBS2 und somit auf das öffentliche Netz PSTN, ISDN zugriffsberechtigt.

Bei der Registrierung muß entweder der Servicetechniker bekannterweise über **(1)** ein Telefon oder **(2)** einen Personal Computer, das bzw. der an der Funk-Mobilstation DIPS, RPP, RNT-1, RNT-4, RNTᵢ, RNT-n_{d} angeschlossen ist, ein basisstationsspezifisches eineindeutiges PARK-Kennungswort (Portable **A**ccess **R**ights **K**ey) und ein AC-Wort (**A**uthentication **C**ode) - einen sogenannten Subskripierungszeichensatz (engl.: subscription string) - eingeben oder es wird bei der Registrierung bekannterweise **(3)** aus einer mobilstationsspezifischen Nummer das AC-Wort automatisch abgeleitet. Eine Eingabe des PARK-Kennungswortes ist in dem letztgenannten Fall nicht notwendig. Das AC-Wort ist ein PIN-Wort (**P**ersonal **I**dentity **N**umber), um auf die Funk-Basisstation DIFS, RFP, RBS1...RBS2 zugreifen zu können. Während der Registrierung berechnen die Funk-Mobilstation DIPS, RPP, RNT-1, RNT-4, RNTᵢ, RNT-n_{d} und die Funk-Basisstation DIFS, RFP, RBS1...RBS2 - gemäß der ETSI-Publikation ETS 300175-7, October 1992, Seiten 1 bis 104 und insbesondere Seite 10 - einen UAK-Wert (**U**ser **A**uthentication **K**ey).

Alle drei vorstehend angegebenen bekannten Möglichkeiten zur Registrierung der Funk-Mobilstation DIPS, RPP, RNT-1, RNT-4, RNTᵢ, RNT-n_{d} bei der Funk-Basisstation DIFS, RFP, RBS1...RBS2 haben gewisse Vorteile, aber auch die nachfolgend zusammengefaßten Nachteile.

### Zu (1):

* Die Eingabe des Subskripierungszeichensatzes durch den Servicetechniker ist fehleranfällig.
* Von den beteiligten Netzbetreibern wird eine komfortable Lösung gewünscht.
* Bei der Realisierung des RLL/WLL-Telekommunikationssystems, mit der Funk-Mobilstation RNTᵢ müßte zur Subskripierung der Funk-Mobilstation KNTᵢ ein Teil des ISDN-Schicht 3-Protokolls zur Möglichkeit der Zifferneingabe nachgebildet werden, weil eine solche Zifferneingbabe des in der *ETSI-Publikation prETS 300822*, *Februar 1997* enthaltenen ISDN-Schicht 3-Protokolls nicht vorgesehen ist.

### Zu (2):

* Der Servicetechniker benötigt einen Personal Computer, um die Funk-Mobilstation DIPS, RPP, RNT-1, RNT-4, RNTᵢ, RNT-n_{d} anzumelden.

### Zu (3):

* Es kann das PARK-Kennungswort nicht eingegeben werden.
* Es ist eine eindeutige Kennzeichnung für jede Funk-Mobilstation DIPS, RPP, RNT-1, RNT-4, RNTᵢ, RNT-n_{d} notwendig.
* Es ist ein fertigungstechnischer Mehraufwand erforderlich.
* Die Beantwortung der Frage "Wann wird mit der Subskripierung begonnnen ?" ist problematisch.

Aus der US 5,640,680 ist ein Funkkommunikationsgerät, ein Funkkommunikationssystem und ein Verfahren zur Erweiterung der Anzahl von Endgeräten, die in dem Funkkommunikationssystem benutzt werden, bekannt, bei dem zwischen Basisstationen und den mit den Basisstationen durch drahtlose Telekommunikation verbindbaren Endgeräten Registrierungsprozeduren ablaufen, in denen die Basisstationen und die Endgeräte gegenseitig Kennungen (Zeichensätze) austauschen. Ein Teil dieser Kennungen werden in der Basisstation gespeichert. Die Kennungen enthalten dabei Signalisierungsinformationen (flags).

Die der Erfindung zugrundeliegende Aufgabe besteht darin, Funktionseinheiten zwischen ersten Telekommunikationsgeräten und zweiten Telekommunikationsgeräten drahtloser Telekommunikationssysteme für Betreiber (private oder öffentliche) der Telekommunikationssysteme effizient und/oder für Benutzer der Telekommunikationsgeräte bedienerfreundlich zu bilden.

Diese Aufgabe wird ausgehend von dem in dem Oberbegriff des Patentanspruches 1 definierten Verfahren durch die im Kennzeichen angegebenen Merkmale gelöst.

Die dabei der Erfindung zugrundeliegende Idee besteht darin, daß öffentliche oder private Betreiber/Benutzer von drahtlosen Telekommunikationssystemen mit durch drahtlose Telekommunikation verbindbaren ersten und zweiten Telekommunikationsgeräten - z.B. eines drahtlosen Telekommunikationssystems gemäß der FIGUREN 1 und 2 - zur Bildung von Funktionseinheiten zwischen den Telekommunikationsgeräten (Anmelden und Registrieren der ersten Telekommunikationsgeräte bei den zweiten Telekommunikationsgeräten) zwischen manuellen, halbautomatischen und/oder automatischen Anmelde- und Registrierungsprozeduren (Subskripierungsprozeduren) wählen können. Dies wird beispielsweise dadurch erreicht, daß Zeichensatzteile von Subskripierungszeichensätzen in den ersten Telekommunikationsgeräten speicherbar sind,
daß in den Zeichensatzteilen Informationen eintragbar sind, die auf in den ersten Telekommunikationsgeräten gespeicherte bzw. eingebbare, in den Subskripierungszeichensätzen eingebundene die Subskripierung initialisierende Parameter (Initialisierungsparameter, z.B. gespeicherte Primär-Initialisierungsparameter bzw. eingegebene Sekundär-Initialisierungsparameter) verweisen,
daß die Initialisierungsparameter in die Subskripierung einleitende unterschiedliche Initialisierungsprozeduren verwendbar sind und
daß die Initialisierungsprozeduren automatisch durch die Primär-Initialisierungsparameter oder aufgrund von vorgegebenen, auf den ersten Telekommunikationsgeräten zugeordneten Bedienoberflächen eingegebenen subskripierungsspezifischen Initialisierungsinformationen durch die Primär-Initialisierungsparameter oder durch die Sekundär-Initialisierungsparameter initialisiert werden.

Durch die vorstehend beschrieben Vorgehensweise ist es z.B. den Betreibern der drahtlosen Telekommunikationssysteme möglich, ihre Erfahrungen bei der Subskripierung mit einfließen zu lassen. So ist es z.B. den Betreibern überlassen, jeweils einen oder mehr als einen (z.B. zwei) Primär- bzw. Sekundär-Initialisierungsparameter für die Subskripierung durch Eintrag in einen Speicher bzw. durch zwingend vorgeschriebene Eingaben vorzugeben. Durch zwei Initialisierungsparameter wird die Suskripierungsprozedur zwar aufwendiger, aber auch sicherer. Die vorstehenden Ausführungen bezüglich der Primär-/Sekundär-Initialisierungsparameter gelten im gleichen Maße auch für die Tertiär-Initialisierungsparameter gemäß Anspruch 5.

Die Weiterbildung der Erfindung gemäß Anspruch 2 geht davon aus, daß die die Subskripierung einleitenden unterschiedlichen Initialisierungsprozeduren nur bei einer erstmaligen Subskripierung der ersten Telekommunikationsgeräte ablaufen.

Die Weiterbildung der Erfindung gemäß Anspruch 3 geht davon aus, daß bei erstmalig zu subskripierenden ersten Telekommunikationsgeräten die die Initialisierungsprozeduren anstoßenden benutzerspezifischen Bedienungshandlungen das Anschließen der ersten Telekommunikationsgeräte an die elektrische Stromversorgung sind. Dadurch wird in Verbindung mit einer automatischen Subskripierung (die die Subskripierung einleitende erste Initalisierungsprozedur) eine einfache benutzerfreundliche Inbetriebnahme des ersten Telekommunikationsgerätes erreicht.

Nach Anspruch 4 sind als alternative benutzerspezifische Bedienungshandlungen zu denen in Anspruch 3 genannten das Betätigen von Tasten und/oder das Eingeben von Sprachinformationen auf den ersten Telekommunikationsgeräten zugeordneten Bedienoberflächen vorgesehen. Außerdem ist es auch möglich, obwohl nicht explizit beansprucht, andere bedienoberflächengestützte benutzerspezifische Bedienungshandlungen, wie z.B. Bedienung durch berührungssensitive Elemente (Stw.: touch screen) etc., vorzusehen.

Nach Anspruch 5 ist es vorteilhaft, wenn als subskripierungsspezifische Initialisierungsinformationen Tertiär-Initialisierungsparameter während der Subskripierungs- und/oder Initialisierungsprozeduren eingegeben werden, die entweder gegenüber den Primär-/Sekundär-Initialisierungsparameter priorisiert oder zu den Primär-/Sekundär-Initialisierungsparametern hinzugefügt werden. Dadurch ist es möglich, daß falsch eingetragene und gespeicherte Primär-/Sekundär-Initialisierungsparameter durch die eingegebenen Tertiär-Initialisierungsparameter, insbesondere während der Subskripierungs- und/oder Initialisierungsprozeduren durch Unterbrechung und Neustart der Prozeduren (Anspruch 8), korrigierbar sind.

Nach Anspruch 6 und 7 ist es vorteilhaft, daß durch die subskripierungsspezifischen Initialisierungsinformationen gemäß den Ansprüchen 1 und 5 die Initialisierungsparameter durch Tastenbetätigungen und/oder Spracheingaben etc. (Anspruch 6) bzw. durch Tastenbetätigungen, Abheben und Auflegen des Handapparates und/oder Spracheingaben etc. auf den den ersten Telekommunikationsgeräten zugeordneten Bedienoberflächen eingegeben werden.

Die übrigen Unteransprüche geben weitere vorteilhafte Weiterbildungen der Erfindung an.

Ein Ausführungsbeispiel der Erfindung wird anhand der FIGUREN 3 bis 5 erläutert. Es zeigen:
- FIGUR 3: einen möglichen vereinfachten Aufbau der Funk-Mobilstationen gemäß der FIGUREN 1 und 2
- FIGUR 4: Ablaufdiagramm für die Subskripierung der Funk-Mobilstation nach FIGUR 3
- FIGUR 5: Aufbau eines gemäß FIGUR 4 verwendeten Subskripierungszeichensatzes

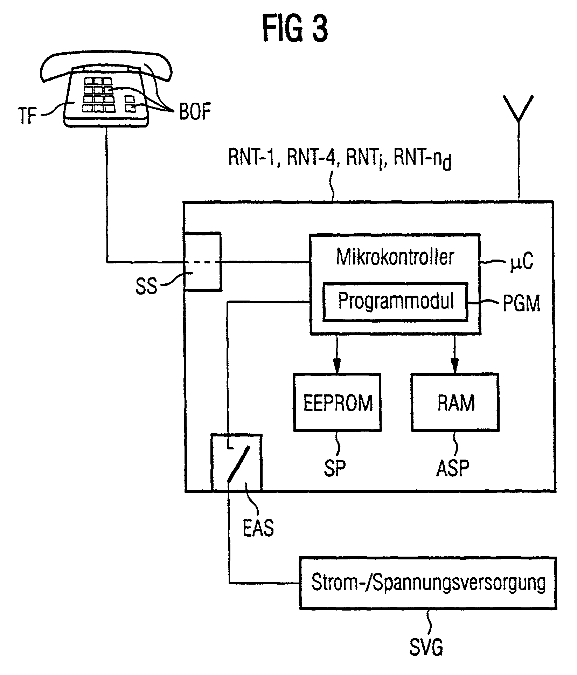

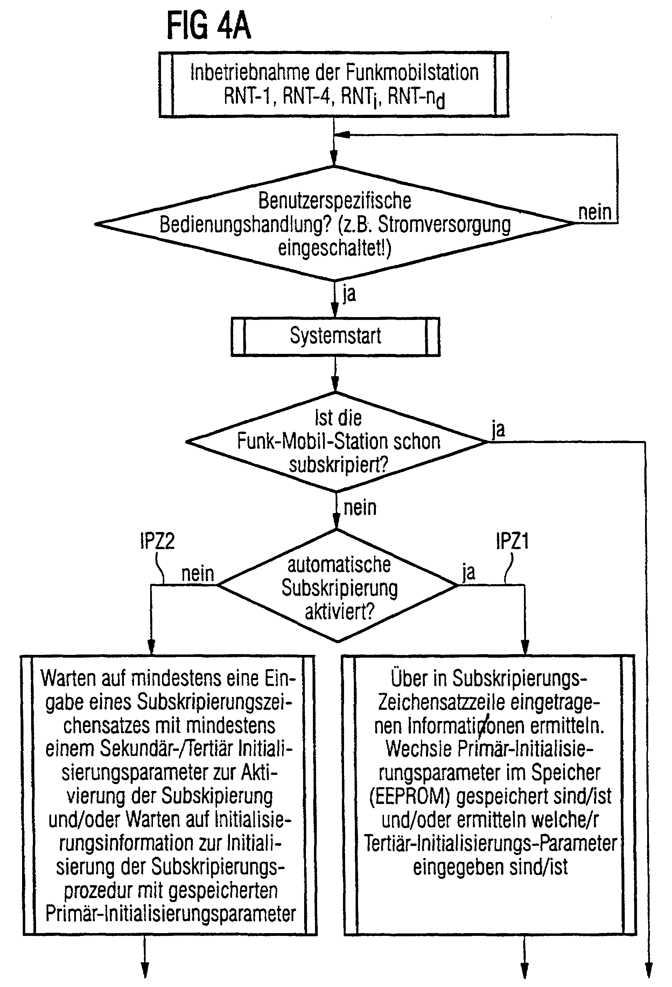

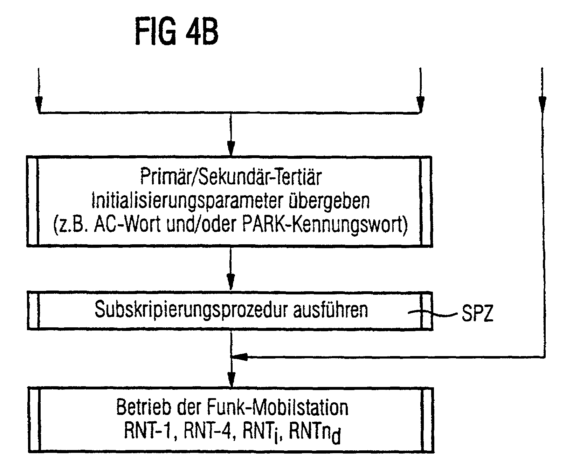

FIGUR 3 zeigt den vereinfachten Aufbau der Funk-Mobilstationen RNT-1, RNT-4, RNTᵢ, RNT-n_{d}. Die Vereinfachung im dargestellten Aufbau besteht darin, daß nur für die Erläuterung des Ausführungsbeispieles der Erfindung (Inbetriebnahme der Funk-Mobilstation RNT-1, RNT-4, RNTᵢ, RNT-n_{d}) wesentlichen Baugruppen der Funk-Mobilstationen RNT-1, RNT-4, RNTᵢ, RNT-n_{d} dargestellt sind, während die übrigen, allgemein bekannten Baugruppen - z.B. für die Funk-Mobilstation RNTᵢ (vgl. *ETSI-Publikation prETS 300822*, *Februar 1997) -* weggelassen worden sind. In der Funk-Mobilstation RNT-1, RNT-4, RNTᵢ, RNT-n_{d} ist ein Mikrocontroller µC mit einem Programmmodul PGM vorgesehen, der Intern-Verbindungen zu einem vorzugsweise als EEPROM ausgebildeten Speicher SP und einem Arbeitspeicher ASP aufweist. Stellvertretend für die nicht dargestellten Baugruppen weist der Mikrocontroller µC außerdem Extern-Verbindungen über eine Schnittsteile SS zu einem an die Funk-Mobilstation RNT-1, RNT-4, RNTᵢ, RNT-n_{d} angeschlossenen Telefon TF mit einer Bedienoberfläche BOF und über einen EIN/AUS-Schalter EAS zu einer die Funk-Mobilstation RNT-1, RNT-4, RNTᵢ, RNT-n_{d} mit elektrischer Energie versorgenden Strom-/Spannungsversorgung SVG auf. Die Bedienoberfläche BOF enthält z.B. eine Tastatur, einen Handapparat und/oder eine Spracheingabe-/Spracherkennungseinrichtung zur Eingabe der in FIGUR 4 angegebenen Subskripierungszeichensätze, Initialisierungsparameter (Primär-/Sekundär-/Tertiär-Initialisierungsparameter; z.B. AC-Wort und/oder PARK-Kennungswort), Initialisierungsinformationen etc.

Für die vorliegende Erfindung ist es - wie bereits in der Beschreibungseinleitung angedeutet - auch möglich, daß die Funk-Mobilstation RNT-1, RNT-4, RNTᵢ, RNT-n_{d} ein ganz gewöhnliches Funk-Mobilteil mit einer eigenen Bedienoberfläche BOF und einer eigenen separaten Strom-/Spannungsversorgung SVG in Form von Batterien oder Akku's ist. Dieses Funk-Mobilteil kann zu den anderen nicht dargestellten Baugruppen als Option die Schnittstelle SS besitzen, an die dann wiederum das Telefon TF oder ein beliebiges anderes Endgerät im Sinne der Ausführungen zu den FIGUREN 1 und 2 anschließbar ist.

In dem Programmmodul PGM des Mikrocontroller µC läuft das für die Subskripierung der Funk-Mobilstation RNT-1, RNT-4, RNTᵢ, RNT-n_{d} bei der Basisstation RBS1...RBS3 nach den FIGUREN 1 und 2 vorgesehene in FIGUR 4 in Form eines Ablaufdiagramms dargestellte Programm ab.

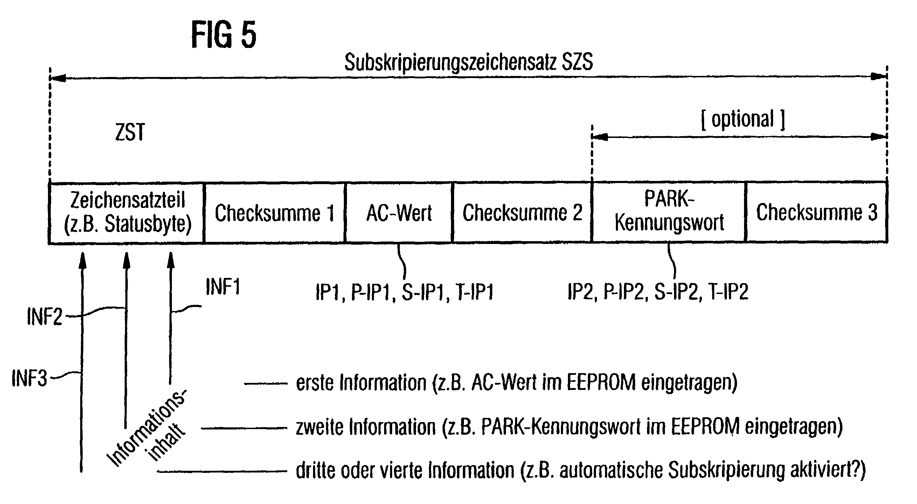

FIGUR 5 zeigt den Aufbau des Subskripierungszeichensatzes SZS mit einem erste Informationen INF1, zweiten Informationen INF2 und dritte Informationen INF3 enthaltenden Zeichensatzteil ZST, einem als AC-Wort ausgebildeten ersten Primär-/Sekundär-/Tertiär-Initalisierungsparameter P-IP1, S-IP1, T-IP-1 und einem als PARK-Kennungswort ausgebildeten weiteren Primär-/Sekundär-/Tertiär-Initalisierungsparameter P-IP2, S-IP2, T-IP2, wie er gemäß dem Ablaufdiagramm in FIGUR 4 in einer ersten Initialisierungsprozedur IPZ1 und einer zweiten Initialisierungsprozedur IPZ2 gespeichert und/oder eingebbar ist und wie für eine Subskripierungsprozedur SPZ übergeben wird. Die Subskripierungsprozedur SPZ und die Initialisierungsprozeduren IPZ1, IPZ2 sind so eng miteinander verbunden, daß die Abläufe in den Initialisierungsprozeduren IPZ1, IPZ2 bezüglich der Tertiär-Initialisierungsparameter auch in der Subskripierungsprozedur SPZ stattfinden können. Wird also die Eingabe mindestens eines Tertiär-Initialisierungsparameters während der Subskripierungsprozedur SPZ und/oder der Initialisierungsprozeduren IPZ1, IPZ2 durch den Mikrocontroller µC ermittelt, so wird die jeweilge Subskripierungsprozedur SPZ bzw. Initialisierungsprozeduren IPZ1, IPZ2 unterbrochen und zumindest mit dem/den Tertiär-Initialisierungsparameter/n neugestartet.

## Patentansprüche

1. Verfahren zum Bilden von Funktionseinheiten zwischen ersten Telekommunikationsgeräten und zweiten Telekommunikationsgeräten drahtloser Telekommunikationssysteme, bei dem
a) zwischen den ersten Telekommunikationsgeräten (RNT-1, RNT-4, RNTᵢ, RNT-n_{d}) und den zweiten Telekommunikationsgeräten (RBS1...RBS3) Subskripierungsprozeduren (SPZ) ablaufen,
b) die Subskripierungsprozeduren (SPZ) von den ersten Telekommunikationsgeräte durch in Subskripierungszeichensätze (SZS) eingebundene Initialisierungsparameter (IP1, IP2) initialisiert werden,
c) Zeichensatzteile (ZST) der Subskripierungszeichensätze (SZS) in den ersten Telekommunikationsgeräten (RNT-1, RNT-4, RNTᵢ, RNT-n_{d}) gespeichert werden,
d) in den Zeichensatzteilen (ZST) jeweils
d1) erste Informationen (INF1) eingetragen werden, die jeweils angeben, ob in den ersten Telekommmunikationsgeräten (RNT-1, RNT-4, RNTᵢ, RNT-n_{d}) jeweils ein erster Primär-Initialisierungsparameter (P-IP1) gespeichert ist und/oder
d2) zweite Informationen (INF2) eingetragen werden, die jeweils angeben, ob in den ersten Telekommmunikationsgeräten (RNT-1, RNT-4, RNTᵢ, RNT-n_{d}) jeweils mindestens ein weiterer Primär-Initialisierungsparameter (P-IP2) gespeichert ist,
**dadurch gekennzeichnet, daß**
e) in den Zeichensatzteilen (ZST) jeweils
e1) dritte Informationen (INF3) eingetragen werden, die jeweils angeben, daß bei einer ersten Initialisierungsprozedur (IPZ1) der jeweils ersten Telekommunikationsgeräte (KNT-1, RNT-4, RNTᵢ, RNT-n_{d}) die Subskripierungsprozeduren unmittelbar durch die jeweils gespeicherten Primär-Initialisierungsparameter (P-IP1, P-IP2) initialisiert werden oder
e2) vierte Informationen (INF4) eingetragen werden, die jeweils angeben, daß bei einer zweiten Initialisierungsprozedur (IPZ2) der jeweils ersten Telekommunikationsgeräte (RNT-1, RNT-4, RNTᵢ, RNT-n_{d}) die Subskripierungsprozeduren aufgrund von vorgegebenen, auf den ersten Telekommunikationsgeräten (RNT-1, RNT-4, RNTᵢ, RNT-n_{d}) zugeordneten Bedienoberflächen (BOF) eingegebenen subskripierungsspezifischen Initialisierungsinformationen durch die jeweils gespeicherten Primär-Initialisierungsparameter (P-IP1, P-IP2) oder durch eingegebene erste Sekundär-Initialisierungsparameter (S-IP1) und/oder mindestens einen weiteren Sekundär-Initialisierungsparameter (S-IP2) initialisiert werden,
f) die erste Initialisierungsprozedur (IPZ1) und die zweite Initialisierungsprozedur (IPZ2) durch vorgegebene benutzerspezifische Bedienungshandlungen an den ersten Telekommunikationsgeräten (RNT-1, RNT-4, RNTᵢ, RNT-n_{d}) angestoßen werden.

2. Verfahren nach Anspruch 1, **dadurch gekennzeichnet, daß**
die Subskripierungsprozeduren jeweils durch die erste Initialisierungsprozedur (IPZ1) oder die zweite Initialisierungsprozedur (IPZ2) initialisiert werden, wenn zwischen den ersten Telekommunikationsgeräten (RNT-1, RNT-4, RNTᵢ, RNT-n_{d}) und den zweiten Telekommunikationsgeräten (RBS1...RBS3) erstmalig Subskripierungsprozeduren (SPZ) ablaufen.

3. Verfahren nach Anspruch 2, **dadurch gekennzeichnet, daß**
die benutzerspezifischen Bedienungshandlungen Handlungen sind, bei denen die ersten Telekommunikationsgeräte (RNT-1, RNT-4, RNTᵢ, RNT-n_{d}) mit elektrischer Energie aus Energiequellen (SVG) versorgt werden.

4. Verfahren nach Anspruch 1 oder 2, **dadurch gekennzeichnet, daß**
die benutzerspezifischen Bedienungshandlungen Handlungen sind, bei denen auf den den ersten Telekommunikationsgeräten (RNT-1, RNT-4, RNTᵢ, RNT-n_{d}) zugeordneten Bedienoberflächen (BOF) Tasten gedrückt und/oder Sprachinformationen eingegeben werden.

5. Verfahren nach einem der Ansprüche 1 bis 4, **dadurch gekennzeichnet, daß**
während der Subskripierungs- und/oder Initialisierungsprozeduren die subskripierungsspezifischen Initialisierungsinformationen auf den den ersten Telekommunikationsgeräten (RNT-1, RNT-4, RNTᵢ, RNT-n_{d}) zugeordneten Bedienoberflächen (BOF) eingebbar sind, bei denen erste Tertiär-Initialisierungsparameter (T-IP1) und/oder mindestens ein weiterer Tertiär-Initialisierungsparameter (T-IP2) eingegeben werden, die entweder gegenüber den eingetragenen und gespeicherten Primär-Initialisierungsparametern (P-IP1, P-IP2) bzw. den eingegebenen Sekundär-Initialisierungsparametern (S-IP1, S-IP2) priorisiert oder zu den Primär-Initialisierungsparametern (P-IP1, P-IP2) bzw. den eingegebenen Sekundär-Initialisierungsparametern (S-IP1, S-IP2) hinzugefügt werden.

6. Verfahren nach einem der Ansprüche 1 bis 5, **dadurch gekennzeichnet, daß**
die subskripierungsspezifischen Initialisierungsinformationen zur Eingabe der Sekundär-Intialisierungsparameter (S-IP1, S-IP2) und der Tertiär-Intialisierungsparameter (T-IP1, T-IP2) Informationen sind, bei denen auf den den ersten Telekommunikationsgeräte (RNT-1, RNT-4, RNTᵢ, RNT-n_{d}) zugeordneten Bedienoberflächen (BOF) Tasten gedrückt und/oder Sprachinformationen eingegeben werden.

7. Verfahren nach einem der Ansprüche 1 bis 5, **dadurch gekennzeichnet, daß**
die subskripierungsspezifischen Initialisierungsinformationen zur Initialisierung der Subskripierungsprozeduren mit den gespeicherten Primär-Intialisierungsparametern (P-IP1, P-IP2) Informationen sind, bei denen auf den den ersten Telekommunikationsgeräte (RNT-1, RNT-4, RNTᵢ, RNT-n_{d}) zugeordneten Bedienoberflächen (BOF) Tasten gedrückt, Handapparate abgenommen und aufgelegt und/oder Sprachinformationen eingegeben werden.

8. Verfahren nach einem der Ansprüche 1 bis 7, **dadurch gekennzeichnet, daß**
die erste Initialisierungsprozedur (IPZ1), die zweite Initialisierungsprozedur (IPZ2) oder die Subskripierungsprozedur (SPZ) abgebrochen und neugestartet wird, wenn bei den ersten Telekommunikationsgeräten auf der jeweils zugeordneten Bedienoberfläche (BOF) die Tertiär-Initialisierungsparameter (T-IP1, T-IP2) eingegeben werden, wobei zumindest die Tertiär-Initialisierungsparameter (T-IP1, T-IP2) der neugestarteten Initialisierungsprozedur (IPZ1, IPZ2) bzw. Subskripierungsprozedur (SPZ) zugrundegelegt werden.

9. Verfahren nach einem der Ansprüche 1 bis 8, **dadurch gekennzeichnet, daß**
ein DECT/GAP-System als das drahtlose Telekommunikationssystem verwendet wird.

10. Verfahren nach einem der Ansprüche 1 bis 9, **dadurch gekennzeichnet, daß**
ein RLL-System als das drahtlose Telekommunikationssystem verwendet wird.

11. Verfahren nach Anspruch 9 oder 10, **dadurch gekennzeichnet, daß**
als erster Initialisierungsparameter ein AC-Wort und als weiterer Initialisierungsparameter unabhängig von der Anzahl der weiteren Initialisierungsparameter immer nur ein PARK-Wort verwendet werden.

12. Verfahren nach Anspruch 9, **dadurch gekennzeichnet, daß**
ein DECT/GAP-Mobilteil als das erste Telekommunikationsgerät verwendet wird und daß eine DECT/GAP-Basisstation als das zweite Telekommunikationsgerät verwendet wird.

13. Verfahren nach Anspruch 10, **dadurch gekennzeichnet, daß**
ein RNT-Gerät mit einem daran angeschlossenen leitungsgebundenen Telekommunikationsendgerät als das erste Telekommunikationsgerät verwendet wird und daß eine Basisstation als das zweite Telekommunikationsgerät verwendet wird.

## Claims

1. Method for forming functional units between first telecommunications appliances and second telecommunications appliances in wire-free telecommunications systems, in which
a) subscription procedures (SPZ) run between the first telecommunications appliances (RNT-1, RNT-4, RNTᵢ, RNT-n_{d}) and the second telecommunications appliances (RBS1...RBS3),
b) the subscription procedures (SPZ) are initialized by the first telecommunications appliances by means of initialization parameters (IP1, IP2) which are included in subscription strings (SZS),
c) string parts (ZST) of the subscription strings (SZS) are stored in the first telecommunications appliances (RNT-1, RNT-4, RNTᵢ, RNT-n_{d}),
d) the string parts (ZST) in each case contain
d1) first information items (INF1) which in each case indicate whether a first primary initialization parameter (P-IP1) is stored in the first telecommunications appliances (RNT-1, RNT-4, RNTᵢ, RNT-n_{d}) and/or
d2) second information items (INF2) are entered which in each case indicate whether in each case at least one further primary initialization parameter (P-IP2) is stored in the first telecommunications appliances (RNT-1, RNT-4, RNTᵢ, RNT-n_{d}),
**characterized in that**
e) the string parts (ZST) in each case contain
e1) third information items (INF3) which in each case indicate that, for a first initialization procedure (IPZ1), for in each case first telecommunications appliances (RNT-1, RNT-4, RNTᵢ, RNT-n_{d}), the subscription procedures are initialized directly by the respective stored primary initialization parameters (P-IP1, P-IP2), or
e2) fourth information items (INF4) are entered, which in each case indicate that, for a second initialization procedure (IPZ2) for the respective first telecommunications appliances (RNT-1, RNT-4, RNTᵢ, RNT-n_{d}), the subscription procedures are initialized on the basis of predetermined, subscription-specific initialization information items, which are entered on operator interfaces (BOF) associated with the first telecommunications appliances (RNT-1, RNT-4, RNTᵢ, RNT-n_{d}), by means of the respective stored primary initialization parameters (P-IP1, P-IP2) or by means of entered first secondary initialization parameters (S-IP1) and/or at least one further secondary initialization parameter (S-IP2)
f) the first initialization procedure (IPZ1) and the second initialization procedure (IPZ2) are triggered by means of predetermined user-specific operation actions on the first telecommunications appliances (RNT-1, RNT-4, RNTᵢ, RNT-n_{d}).

2. Method according to Claim 1, **characterized in that**
the subscription procedures are in each case initialized by the first initialization procedure (IPZ1) or the second initialization procedure (IPZ2) when subscription procedures (SPZ) run for the first time between the first telecommunications appliances (RNT-1, RNT-4, RNTᵢ, RNT-n_{d}) and the second telecommunications appliances (RBS1 ... RBS3).

3. Method according to Claim 2, **characterized in that**
the user-specific operation actions are actions in which the first telecommunications appliances (RNT-1, RNT-4, RNTᵢ, RNT-n_{d}) are supplied with electrical power from power sources (SVG).

4. Method according to Claim 1 or 2, **characterized in that**
the user-specific operation actions are actions in which keys are pressed on the operator interfaces (BOF) which are associated with the first telecommunications appliances (RNT-1, RNT-4, RNTᵢ, RNT-n_{d}) and/or voice information is entered.

5. Method according to one of Claims 1 to 4, **characterized in that**,
during the subscription and/or initialization procedures, the subscription-specific initialization information can be entered on the operator interfaces (BOF) associated with the first telecommunications appliances (RNT-1, RNT-4, RNTᵢ, RNT-n_{d}), during which first tertiary initialization parameters (T-IP1) and/or at least one further tertiary initialization parameter (T-IP2) are/is entered, which are/is prioritized either with respect to the entered and stored primary initialization parameters (P-IP1, P-IP2) or the entered secondary initialization parameters (S-IP1, S-IP2), and/or are/is added to the primary initialization parameters (P-IP1, P-IP2) or the entered secondary initialization parameters (S-IP1, S-IP2).

6. Method according to one of Claims 1 to 5, **characterized in that**
the subscription-specific initialization information for input in the secondary initialization parameters (S-IP1, S-IP2) and the tertiary initialization parameters (T-IP1, T-IP2) is information for which keys are pressed on the operator interfaces (BOF) associated with the first telecommunications appliances (RNT-1, RNT-4, RNTᵢ, RNT-n_{d}), and/or voice information is entered.

7. Method according to one of Claims 1 to 5, **characterized in that**
the subscription-specific initialization information for initializing the subscription procedures with the stored primary initialization parameters (P-IP1, P-IP2) is information for which keys are pressed on the operator interfaces (BOF) associated with the first telecommunications appliances (RNT-1, RNT-4, RNTᵢ, RNT-n_{d}), handsets are lifted off and placed down and/or voice information is entered.

8. Method according to one of Claims 1 to 7, **characterized in that**
the first initialization procedure (IPZ1), the second initialization procedure (IPZ2) or the subscription procedure (SPZ) is terminated and restarted if, on the first telecommunications appliances, the tertiary initialization parameters (T-IP1, T-IP2) are entered on the respectively associated operator interface (BOF), in which case at least the tertiary initialization parameters (T-IP1, T-IP2) of the restarted initialization procedure (IPZ1, IPZ2) or the subscription procedure (SPZ) are used as the basis.

9. Method according to one of Claims 1 to 8, **characterized in that**
a DECT/GAP system is used as the wire-free telecommunications system.

10. Method according to one of Claims 1 to 9, **characterized in that**
an RLL system is used as the wire-free telecommunications system.

11. Method according to Claim 9 or 10, **characterized in that**
an AC word is used as the first initialization parameter, and only one PARK word is ever used as the further initialization parameter, irrespective of the number of further initialization parameters.

12. Method according to Claim 9, **characterized in that**
a DECT/GAP portable part is used as the first telecommunications appliance, and **in that** a DECT/GAP base station is used as the second telecommunications appliance.

13. Method according to Claim 10, **characterized in that** the first telecommunications appliance is an RNT appliance having a line-based telecommunications terminal connected to it, and **in that** the second telecommunications appliance is a base station.

## Revendications

1. Procédé destiné à constituer des unités fonctionnelles entre des premiers appareils de télécommunication et des deuxièmes appareils de télécommunication de systèmes de télécommunication sans fil, au cours duquel
a) des procédures de souscription (SPZ) se déroulent entre les premiers appareils de télécommunication (RNT-1, RNT-4, RNTᵢ, RNT-n_{d}) et les deuxièmes appareils de télécommunication (RBS1 ... RBS3),
b) les procédures de souscription (SPZ) sont initialisées par les premiers appareils de télécommunication grâce à des paramètres d'initialisation (IP1, IP2) intégrés dans des jeux de caractères de souscription (SZS),
c) des parties de jeux de caractères (ZST) des jeux de caractères de souscription (SZS) sont mémorisées dans les premiers appareils de télécommunication (RNT-1, RNT-4, RNTᵢ, RNT-n_{d}),
d) dans les parties de jeux de caractères (ZST) sont inscrites, selon le cas,
(d1) des premières informations (INF1) qui indiquent, selon le cas, si, dans les premiers appareils de télécommunication (RNT-1, RNT-4, RNTᵢ, RNT-n_{d}), respectivement, un premier paramètre d'initialisation primaire (P-IP1) est mémorisé et/ou
(d2) des deuxièmes informations (INF2) qui indiquent, respectivement, si, dans les premiers appareils de télécommunication (RNT-1, RNT-4, RNTᵢ, RNT-n_{d}), selon le cas, au moins un autre paramètre primaire d'initialisation (P-IP2) est mémorisé,
**caractérisé par le fait que**
e) dans les parties de jeux de caractères (ZST) sont inscrites, selon le cas,
(e1) des troisièmes informations (INF3) qui indiquent, selon le cas, que, lors d'une première procédure d'initialisation (IPZ1) des premiers appareils de télécommunication respectifs (RNT-1, RNT-4, RNTᵢ, RNT-n_{d}), les procédures de souscription sont initialisées directement par les paramètres primaires d'initialisation respectifs (P-IP1, P-IP2) ou
(e2) des quatrièmes informations (INF4) qui indiquent, selon le cas, que, lors d'une deuxième procédure d'initialisation (IPZ2) des premiers appareils de télécommunication respectifs (RNT-1, RNT-4, RNTᵢ, RNT-n_{d}), les procédures de souscription, en raison d'informations d'initialisation, spécifiques à la souscription, prédéterminées et saisies sur les interfaces homme-machine de commande BOF, affectées aux premiers appareils de télécommunication (RNT-1, RNT-4, RNTᵢ, RNT-n_{d}), sont initialisées par les paramètres primaires d'initialisation respectifs mémorisés (P-IP1, P-IP2) ou par des premiers paramètres secondaires d'initialisation (S-IP1) saisis et/ou au moins un autre paramètre secondaire d'initialisation (S-IP2),
f) la première procédure d'initialisation (IPZ1) et la deuxième procédure d'initialisation (IPZ2) est déclenchée par des manipulations de commande, prédéterminées et spécifiques à l'utilisateur, sur les premiers appareils de télécommunication (RNT-1, RNT-4, RNTᵢ, RNT-n_{d}).

2. Procédé selon la revendication 1
**caractérisé par le fait que**
les procédures de souscription sont initialisées, selon le cas, par la première procédure d'initialisation (IPZ1) ou par la deuxième procédure d'initialisation (IPZ2) lorsque des procédures de souscription (SPZ) se déroulent pour la première fois entre les premiers appareils de télécommunication respectifs (RNT-1, RNT-4, RNTᵢ, RNT-n_{d}) et les deuxièmes appareils de télécommunication (RBS1 ... RBS3).

3. Procédé selon la revendication 2
**caractérisé par le fait que**
les manipulations de commande spécifiques à l'utilisateur sont des manipulations à la suite desquelles les premiers appareils de télécommunication (RNT-1, RNT-4, RNTᵢ, RNT-n_{d}) sont alimentés en énergie électrique à partie de sources d'énergie (SVG).

4. Procédé selon la revendication 1 ou 2
**caractérisé par le fait que**
les manipulations de commande spécifiques à l'utilisateur sont des manipulations au cours desquelles, sur les interfaces homme-machine de commande BOF, affectées aux premiers appareils de télécommunication respectifs (RNT-1, RNT-4, RNTᵢ, RNT-n_{d}), des touches sont actionnées et/ou des informations vocales sont entrées.

5. Procédé selon l'une des revendications 1 à 4
**caractérisé par le fait que**,
pendant les procédures de souscription et/ou d'initialisation, il est possible d'entrer, sur les interfaces homme-machine de commande BOF, affectées aux premiers appareils de télécommunication respectifs (RNT-1, RNT-4, RNTᵢ, RNT-n_{d}), les informations d'initialisation spécifiques à la souscription, avec lesquelles sont entrés des premiers paramètres tertiaires d'initialisation (T-IP1) et/ou, au moins, un autre paramètre tertiaire d'initialisation (T-IP2) qui, ou bien sont prioritaires par rapport aux paramètres primaires d'initialisation, inscrits et mémorisés, (P-IP1, P-IP2) ou, respectivement, par rapport aux paramètres secondaires d'initialisation saisis (S-IP1, S-IP2), ou bien sont ajoutés aux paramètres primaires d'initialisation (P-IP1, P-IP2) ou, respectivement, aux paramètres secondaires d'initialisation saisis (S-IP1, S-IP2).

6. Procédé selon l'une des revendications 1 à 5
**caractérisé par le fait que**
les informations d'initialisation, spécifiques à la souscription et destinées à entrer les paramètres secondaires d'initialisation (S-IP1, S-IP2) et les paramètres tertiaires d'initialisation (T-IP1, T-IP2), sont des informations provenant d'actions au cours desquelles, sur les interfaces homme-machine de commande BOF, affectées aux premiers appareils de télécommunication respectifs (RNT-1, RNT-4, RNTᵢ, RNT-n_{d}), des touches sont actionnées et/ou des informations vocales sont entrées.

7. Procédé selon l'une des revendications 1 à 5
**caractérisé par le fait que**
les informations d'initialisation, spécifiques à la souscription et destinées à l'initialisation des procédures de souscription avec les paramètres primaires d'initialisation mémorisés (P-IP1, P-IP2), sont des informations provenant d'actions au cours desquelles, sur les interfaces homme-machine de commande BOF, affectées aux premiers appareils de télécommunication respectifs (RNT-1, RNT-4, RNTᵢ, RNT-n_{d}), des touches sont actionnées, des combinés téléphoniques sont levés et reposés et/ou des informations vocales sont entrées.

8. Procédé selon l'une des revendications 1 à 7
**caractérisé par le fait que**
la première procédure d'initialisation (IPZ1), la deuxième procédure d'initialisation (IPZ2) ou la procédure de souscription (SPZ) est interrompue et redémarrée, lorsque sont saisis, sur les interfaces homme-machine de commande BOF, affectées respectivement aux premiers appareils de télécommunication, les paramètres tertiaires d'initialisation (T-IP1, T-IP2), les paramètres tertiaires d'initialisation (T-IP1, T-IP2) étant au moins appliqués à la procédure d'initialisation (IPZ1, IPZ2) et, respectivement, à la procédure de souscription (SPZ) nouvellement démarrée.

9. Procédé selon l'une des revendications 1 à 8
**caractérisé par le fait qu'**un
système DECT/GAP est utilisé comme système de télécommunication sans fil.

10. Procédé selon l'une des revendications 1 à 9
**caractérisé par le fait qu'**un
système RLL est utilisé comme système de télécommunication sans fil.

11. Procédé selon la revendication 9 ou 10
**caractérisé par le fait que**,
comme premier paramètre d'initialisation, on utilise un mot AC et, comme autre paramètre d'initialisation, on n'utilise toujours qu'un seul mot PARK, quel que soit le nombre des autres paramètres d'initialisation.

12. Procédé selon la revendication 9
**caractérisé par le fait qu'**un
poste mobile DECT/GAP est utilisé en tant que premier appareil de télécommunication et qu'une station de base DECT/GAP est utilisée comme deuxième appareil de télécommunication.

13. Procédé selon la revendication 10
**caractérisé par** l e fait qu'un
appareil RNT, ayant un terminal de télécommunication qui lui est raccordé par câblage fixe, est utilisé en tant que premier appareil de télécommunication et qu'une station de base est utilisée comme deuxième appareil de télécommunication.
